# EUROPEAN PATENT APPLICATION

(11) **EP 4 428 591 A1**
(43) Date of publication of application: **11.09.2024**
(21) Application number: 24161011.2
(22) Date of filing: 01.03.2024
(51) Int. Cl.: G02B 6/30, G02B 6/36, G02B 6/42

(54) **SYSTEM AND METHODS FOR PASSIVE ALIGNMENTS OF LIGHT TRANSMITTING OR RECEIVING DEVICES TO PLANAR WAVEGUIDES**

(30) Priority: 02.03.2023 US 202363449520 P
(71) Applicant: TTM Technologies, Inc., Santa Ana, CA 92707 (US)
(72) Inventor: Senk, David, California (US); Immonen, Marika, Vantaa (FI)
(74) Representative: Greaves Brewster LLP

(57) **Abstract**

A passive alignment system includes a base substrate, a lower cladding layer disposed over the base substrate, a core layer disposed over the lower cladding layer, and an upper cladding layer disposed over the core layer. The passive alignment system also includes one or more planar waveguides including one or more cores formed in a first portion of the core layer disposed over a first portion of the lower cladding layer, the one or more cores extending from a transmitting end to a receiving end in an X-Y plane. The passive alignment system also includes at least one alignment feature formed in a second portion of the core layer disposed over a second portion of the lower cladding layer and configured to align with an optical receiving or transmitting device. The at least one alignment feature aligns the optical receiving or transmitting device with the one or more planar waveguides.

## Description

### CROSS-REFERENCE TO RELATED PATENT APPLICATIONS

This patent application claims the benefit under 35 U.S.C. § 119(e) of U.S. Patent Application Serial No. 63/ 449,520, entitled "SYSTEMS AND METHODS FOR PASSIVE ALIGNMENTS OF LIGHT TRANSMITTING OR RECEIVING DEVICES TO PLANAR WAVEGUIDES," filed on March 2, 2023, which is incorporated herein by reference in its entirety.

### FIELD

The disclosure is directed to passive alignments of light transmitting or receiving devices to planar waveguides on printed circuit boards. More specifically, the disclosure relates to passive alignments of optical connectors with planar waveguides on printed circuit boards and passive alignments of optical fibers with planar waveguides on printed circuit boards.

### BACKGROUND

Optical waveguides are generally used for providing an optical path to transmit optical signals over a base substrate, such as a printed circuit board (PCB). The optical waveguides are generally integrated or embedded with the base substrate. The waveguides include cores in which optical signals propagate. The cores may also be transparent polymer cores or transparent glass cores. Each core is surrounded by a polymer or a glass cladding layer. The cladding layers have a proper refractive index compared to the core to confine the light within the core.

Optical connectors are used to connect optical fibers or optical devices to waveguides in a variety of applications including the telecommunication network, local area networks, data center links, and internal links in high-performance computers. These optical waveguide connectors can be grouped into single-fiber designs and multiple-fiber designs.

Conventional solutions for optical alignments often use active alignments of the optical connectors or fibers to waveguides. The active alignments are expensive and time-consuming. There remains a need for developing systems and methods for passive alignments to achieve high-volume production and reduce costs associated with active alignments.

### BRIEF SUMMARY

A passive alignment system is provided for passive alignments of optical transmitting devices or receiving devices with planar waveguides.

In one aspect, a passive alignment system includes a base substrate, a lower cladding layer disposed over the base substrate, a core layer disposed over the lower cladding layer, and an upper cladding layer disposed over the core layer. The passive alignment system also includes one or more planar waveguides including one or more cores formed in a first portion of the core layer disposed over a first portion of the lower cladding layer, the one or more cores extending from a transmitting end to a receiving end in an X-Y plane. The passive alignment system also includes at least one alignment feature formed in a second portion of the core layer disposed over a second portion of the lower cladding layer and configured to align with an optical receiving or transmitting device. The at least one alignment feature aligns the optical receiving or transmitting device with the one or more planar waveguides.

In some aspects, the optical receiving or transmitting device may include an optical connector configured to connect to the one or more planar waveguides. The optical connector may include at least one corresponding alignment feature configured to mate to the at least one alignment feature in the core layer.

In some aspects, the at least one corresponding alignment feature extends along a Z axis perpendicular to the X-Y plane such that a bottom surface of the optical connector contacts a top surface of the core layer.

In some aspects, a top surface of the core layer is used as a reference along a Z-axis for alignment of the optical connector to the one or more planar waveguides, the Z-axis being perpendicular to the X-Y plane.

In some aspects, the at least one alignment feature of the core layer may include one of a guiding slot, or a guiding hole. The at least one corresponding alignment feature of the optical connector may include a guiding insert, a guiding rail, or a guiding pin having a shape configured to match to the shape of the guiding slot or guiding hole. The guiding slot or the guiding hole may have a cross-section including one of a square, a rectangle, a triangle, a trapezoid, or a circle.

In some aspects, a first portion of the upper cladding layer may be disposed over the one or more planar waveguides and a second portion of the upper cladding layer may be disposed over the at least one alignment feature and the lower cladding layer.

In some aspects, the optical receiving or transmitting device may include one or more optical fibers and at least one fiber alignment channel configured to receive the one or more optical fibers, the at least one alignment feature aligning the one or more optical fibers with the one or more planar waveguides to connect one or more cores of the one or more optical fibers with one or more cores of the one or more planar waveguides.

In some aspects, the at least one fiber alignment channel may extend from a top surface of the upper cladding layer through the upper cladding layer and the lower cladding layer to a top surface of the base substrate along a Z-axis perpendicular to the X-Y plane, and may extend in the X-Y plane to be parallel to the one or more cores.

In some aspects, the at least one alignment feature may include a first alignment feature positioned to a first side of the at least one fiber alignment channel and a second alignment feature positioned to a second side of the at least one fiber alignment channel opposite to the first side, the first alignment feature and the second alignment feature are embedded between the upper cladding layer and the lower cladding layer.

In some aspects, the first alignment feature may include a first saw tooth pattern, and the second alignment feature may include a second saw tooth pattern.

In some aspects, the base substrate may include a printed circuit board.

In some aspects, the transmitting end may be coupled to one or more transmitters, and the receiving end may be coupled to one or more receivers.

In some aspects, a method may include adjusting position of the optical connector relative to one of the one or more planar waveguides; and aligning the at least one corresponding alignment feature of the optical connector with the at least one alignment feature of the one or more planar waveguides to reduce separation between the optical connector and the one or more planar waveguides in a Z axis perpendicular to the X-Y plane.

In some aspects, the at least one corresponding alignment feature of the optical connector may be configured to align with the at least one alignment feature of the one or more planar waveguides within +/-1 µm.

In some aspects, the at least one alignment feature in the core layer may include one of a guiding slot or a guiding hole. The at least one corresponding alignment feature of the optical connector may include a guiding insert, a guiding rail, or a guiding pin having a shape configured to match to the shape of the guiding slot or guiding hole.

In some aspects, the method may also include aligning two or more coarse alignment structures of the optical connector with two or more holes on the base substrate near the one or more planar waveguides in a X-Y plane prior to aligning the at least one corresponding alignment feature; and securing the two or more coarse alignment structures.

In some aspects, a method may include placing the one or more optical fibers into the at least one fiber alignment channel; and aligning one or more cores of the one or more optical fibers with one or more cores of the one or more planar waveguides by using the at least one alignment feature.

In some aspects, the at least one alignment feature may include a first alignment feature having a first saw tooth pattern positioned to a first side of the at least one fiber alignment channel and a second alignment feature having a second saw tooth pattern positioned to a second side of the at least one fiber alignment channel opposite to the first side, the first alignment feature and the second alignment feature are embedded between the upper cladding layer and the lower cladding layer.

In some aspects, aligning one or more cores of the one or more optical fibers may further include pushing one of the one or more optical fibers against the first saw tooth pattern and the second saw tooth pattern to reduce alignment tolerance.

In some aspects, the alignment tolerance for the one or more optical fibers to one or more cores of the one or more planar waveguides may be within +/- 0.1 µm.

Additional embodiments and features are set forth in part in the description that follows and will become apparent to those skilled in the art upon examination of the specification or may be learned by the practice of the disclosed subject matter. A further understanding of the nature and advantages of the disclosure may be realized by reference to the remaining portions of the specification and the drawings, which form a part of this disclosure.

### BRIEF DESCRIPTION OF THE DRAWINGS

The description will be more fully understood with reference to the following figures and data graphs, which are presented as various embodiments of the disclosure and should not be construed as a complete recitation of the scope of the disclosure, wherein:
FIG. 1 illustrates a cross-sectional view of a planar waveguide over a base substrate according to an embodiment of the disclosure;
FIG. 2A illustrates a front view of a plurality of waveguides over a base substrate with alignment features according to an embodiment of the disclosure;
FIG. 2B illustrates a top view of the plurality of waveguides over the base substrate with alignment features of FIG. 2A according to an embodiment of the disclosure;
FIG. 3A is a perspective view of a PCB including waveguides and alignment features and a PCB side connector with corresponding alignment features according to an embodiment of the disclosure;
FIG. 3B is a side view of the PCB and the PCB side connector of FIG. 3A according to an embodiment of the disclosure;
FIG. 4A is a perspective view of a PCB including waveguides and alignment features and a PCB side connector with corresponding alignment pins according to an embodiment of the disclosure.
FIG. 4B is a side view of the PCB including waveguides and alignment features and the PCB side connector and corresponding alignment pins of FIG. 4A according to an embodiment of the disclosure;
FIG. 5A is a side sectional view of an optical fiber in a fiber alignment channel formed with a waveguide on a base substrate according to an embodiment of the disclosure;
FIG. 5B is a top sectional view of the optical fiber in the fiber alignment channel formed with the waveguide on the base substrate of FIG. 5A according to an embodiment of the disclosure;
FIG. 6 is a flow chart illustrating the steps for passive alignments of optical receiving or transmitting devices with planar waveguides according to an embodiment of the disclosure;
FIG. 7 is a flow chart illustrating the steps for passive alignments of optical fibers with planar waveguides according to an embodiment of the disclosure; and
FIG. 8 illustrates example cross-sections of the core alignment slots formed in the core layer according to embodiments of the disclosure.

### DETAILED DESCRIPTION

The disclosure may be understood by reference to the following detailed description, taken in conjunction with the drawings as described below. It is noted that, for purposes of illustrative clarity, certain elements in various drawings may not be drawn to scale.

The disclosure addresses the issues with active alignments and provides passive alignment systems that permit passive alignments of optical receiving or transmitting devices, such as optical connectors or optical fibers, with optical planar waveguides or planar waveguides. The passive alignment system includes alignment features or core alignment features, or precision alignment features, such as guiding slots or guiding holes, which are formed in the core layer at the same time as the waveguides are formed. The passive alignment system allows passive alignment of optical receiving or transmitting devices (e.g., optical connectors or optical fibers) with planar optical waveguides. When the precision alignment features and waveguides are simultaneously formed by photo-imaging into a core layer, the precision alignment features can be accurately registered with the waveguides. The optical receiving or transmitting devices include corresponding precision alignment features, such as guiding inserts, guiding rails, or guiding pins. The core alignment features are configured to receive the corresponding precision alignment features, thus ensuring the alignment between the optical receiving or transmitting devices and the planar waveguides. The corresponding precision alignment features in the optical receiving or transmitting devices (e.g., optical connectors or optical fibers) are configured to mate with the precision alignment features in the waveguide core layer, which obviates the expensive and time-consuming active alignment of the optical receiving or transmitting device (e.g., optical connectors or optical fibers) and the optical planar waveguides.

The disclosed passive alignment system uses the top surface of the core layer of the optical planar waveguides as a mechanical mating surface, which permits the precision alignment of the optical receiving or transmitting devices (e.g., optical connectors) to the planar waveguides.

### Planar Waveguides

Planar waveguides are optical structures that confine the optical radiation in the direction of propagation. There are two independent electromagnetic modes in planar waveguides: transverse electric (TE) mode and transverse magnetic (TM) mode.

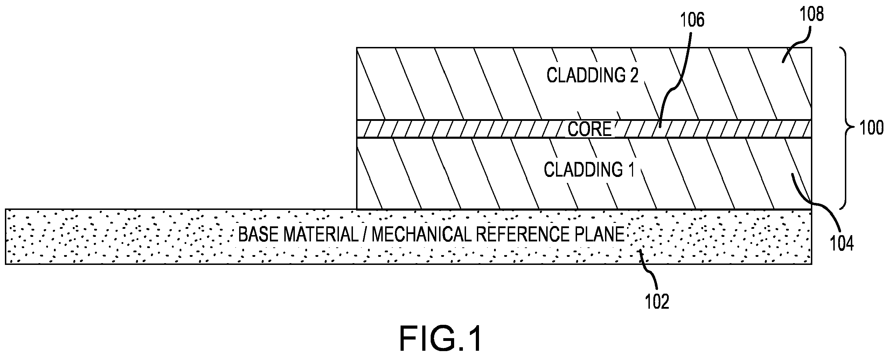

FIG. 1 illustrates a cross-sectional view of a planar waveguide over a base substrate according to an embodiment of the disclosure. As illustrated in FIG. 1, a planar waveguide 100 is disposed over a base substrate 102, such as a printed circuit board (PCB), among others. The planar waveguide 100 is stacked in an X-Y plane on the PCB. The planar waveguide 100 has a planar geometry and includes a core 106 that guides optical waves, optical signals, or light signals to propagate along one direction. The core 106 is sandwiched between a lower cladding layer 104 and an upper cladding layer 108. The core 106 is a longitudinally extended high-index optical medium, which is transversely surrounded by cladding layers 104 and 108 which are low-index media.

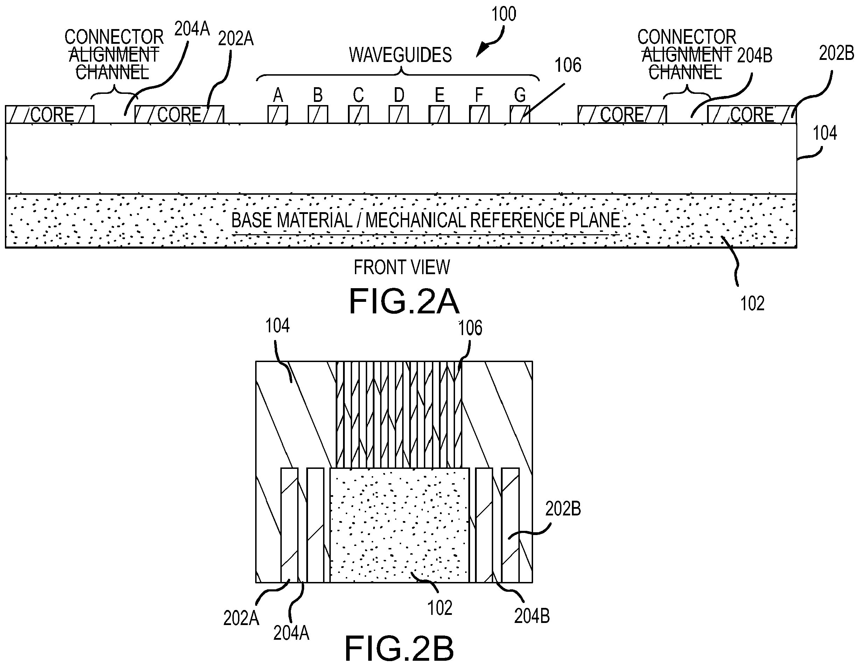

The base substrate 102 provides the mechanical reference in a Z-axis perpendicular to the X-Y plane. Core alignment features or structures are formed in a core layer that forms the core 106. The core alignment features vary with the particular type of optical transmitting or receiving devices. Examples of core alignment features are illustrated in FIGS. 2A-2B, 3A-B, 4A-4B, and 5A-5B. The top surface of the core layer is used for alignments between optical transmitting or receiving devices and planar waveguides. As such, the thickness variation in the lower cladding layer 104 determines the majority of the Z-axis variation in the alignment between the optical transmitting or receiving device and the planar waveguide.

In some variations, the planar waveguides are planar polymer waveguides (PPWG).

In some variations, each of the lower cladding layer and upper cladding layer is optically transparent.

In some variations, each of the lower cladding layer and upper cladding layer has a first refractive index and a second refractive index lower than a third refractive index of the core layer such that optical signals can transmit within the one or more cores.

### Alignment System Including Alignment Features for Optical Connectors

In some variations, the optical transmitting or receiving device may be an optical connector, such as a PCB side connector, which connects the waveguides on the PCB and also has a slot configured to connect to another optical device.

FIG. 2A illustrates a front view of a plurality of waveguides over a base substrate with alignment features according to an embodiment of the disclosure. As illustrated in FIG. 2A, multiple waveguides 100A-100G are disposed over or built over the base substrate 102. Each waveguide 100A-G includes a core 106 sandwiched between a first portion of the lower cladding layer 104 and the upper cladding layer (not shown). Core 106 may have a cross-section of a rectangle or a square, among others.

A first core alignment structure 202A is formed on the left side of the waveguide 100A, while a second core alignment structure 202B is formed on the right side of the waveguide 100G. Core alignment structures or features 202A and 202B are formed in the same core layer as core 106 and disposed over a second portion of the lower cladding layer 104 which does not overlap with the first portion of lower cladding layer 104. Mechanical alignment channels 204A and 204B can be formed in the core alignment structures 202A and 202B, respectively. Mechanical alignment channels 204A and 204B can be formed or imaged at the same time as the waveguides. The methods of forming the waveguide structures including the alignment channels may include lithography imaging with masks. For example, the lithography imaging may use a mask with transparent areas and opaque areas to allow the selective polymerization (or de-polymerization) of a photo-sensitive polymer film material. The tolerance control on the channel width of mechanical alignment channels 204A and 204B can be within +/-2 microns. Registration tolerance relative to the waveguides 100A-G along the Z-axis may be reduced to approximately 0 microns. The methods of forming the waveguide structures may also include maskless lithography or direct imaging.

It will be appreciated by those skilled in the art that the number of waveguides and the shape or size of the cores of waveguides may vary.

FIG. 2B illustrates a top view of the plurality of waveguides over the base substrate with alignment features of FIG. 2A according to an embodiment of the disclosure. As illustrated in FIG. 2B, the waveguides 100A-G including cores 106 are disposed over a first region of the base substrate 102 and are substantially parallel to each other. The lower cladding layer 104 is disposed over a second region of the base substrate 102, where the second region of the base substrate 102 does not overlap with the first region of the base substrate 102. For example, the core alignment structures 202A and 202B are disposed over the lower cladding layer 104 which is disposed over the second region of the base substrate 102, while the waveguides 100A-G are placed in the first region of the base substrate 102. A third region of the base substrate 102 between alignment structures 202A and 202B is not covered by the lower cladding layer 104. The third region of the base substrate 102 does not overlap with the first region of the base substrate 102 or the second region of the base substrate 102. Also, the mechanical alignment channels 204A-B formed between core alignment structures 202A and 202B are substantially parallel to the cores 106 of the waveguides 100A-G.

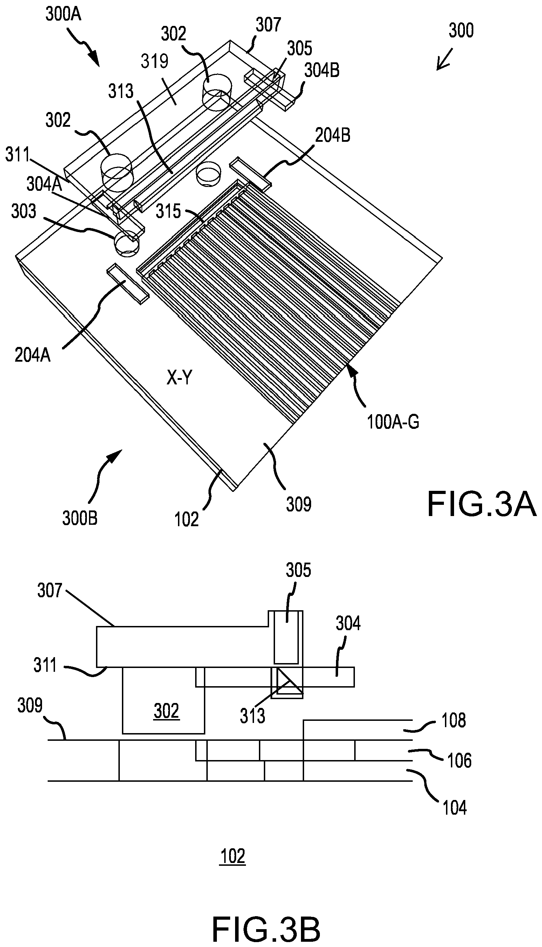

FIG. 3A is a perspective view of a PCB including waveguides and alignment features and a PCB side connector with corresponding alignment features according to an embodiment of the disclosure. As illustrated in FIG. 3A, a system with passive alignment features 300 includes a top connector portion 300A including a 90-degree PCB side connector, and a bottom portion 300B including a base substrate or PCB 102 and waveguides 100A-G. The top connector portion 300A includes an optical connector 307 which includes coarse alignment structures (e.g., pins) 302 extending outward vertically from the bottom surface 311 of the optical connector 307. The coarse alignment structures (e.g., pins) 302 align with guiding holes 303 on the PCB 102. The guiding holes 303 are configured to receive the coarse alignment structures (e.g., pins) 302. The optical connector 307 also includes precision alignment features 304A-B which is an integral part of the optical connector 307 and positioned on the bottom surface 311 of the optical connector 307 to provide alignment. The precision alignment features 304A-B are positioned to be outside the region of the waveguides 100A-G when the optical connector 307 connects to the waveguides 100A-G. The optical connector 307 also includes an optical connector slot or mechanical guide 305 facing upward and configured to connect to another optical device. Glue may be applied anywhere that the glue can make contact with both the connector and the core, upper cladding, PCB surfaces, and/or lower cladding to secure the connector in position.

The lower waveguide portion 300B includes the PCB 102 and multiple waveguides 100A-G disposed over the first portion of the PCB 102. The lower waveguide portion 300B also includes core alignment features 204A-B disposed over a second portion of the PCB 102. The precision alignment features 304A-B are configured to mate to the core alignment features 204A-B to align the optical connector 307 with the waveguides.

As illustrated in FIG. 3A, a light turning structure 313 (e.g., 90-degree mirror) may be attached to the bottom surface 311 of connector 307. The PCB 102 may also include cavity 315 configured to receive the light turning structure 313 attached to the connector 307. Cavity 315 is positioned outside the waveguides 100A-G. The light turning structure 313 can be used to turn light that enters vertically from above 90-degrees so that light can travel in the X-Y plane. The light turning structure 313 can also be used to turn light coming from the X-Y plane 90-degrees to travel in the vertical direction to be detected by a photodiode detector mounted horizontally above (or below) the printed circuit board.

FIG. 3B is a side view of the PCB and the PCB side connector of FIG. 3A according to an embodiment of the disclosure. As illustrated in FIG. 3B, the core alignment features 204A-B are formed in the same core layer as core 106.

Precision alignment features 304A-B are referenced to the top surface 309 of the core layer. The precision alignment features 304A-B extend outward vertically from the bottom surface 311, e.g., along a Z axis perpendicular to the X-Y plane. The precision alignment features 304A-B are configured to mate to the core alignment feature 204A-B in the core layer such that the bottom surface 311 of the optical connector 307 contacts the top surface 309 of the core layer of waveguides 100.

The core alignment features 204A-B and the corresponding precision alignment features 304A-B of the optical connector 307 allow the passive alignment of the optical connector 307 to the waveguides 100A-G more precisely than the coarse alignment structures (e.g., pins) and reduce the separation between the bottom surface 311 of the connector 307 and the top surface 309 of the core layer. The bottom surface 311 of the optical connector 307 contacts the top surface 309 of the core layer 106 when the precision alignment features 304A-B of the optical connector 307 mate into the core alignment features 204A-B.

In some variations, the precision alignment features 304A-B can be guiding inserts or guiding rails while the core alignment features 204A-B can be guiding slots configured to receive the precision alignment features 304A-B. Precision alignment features or guide inserts 304A-B allow the bottom surface 311 of connector 307 to contact the top surface 309 of the core layer. The cores 106 align with the light alignment structure 313 in such a way that light from the waveguides A-G is redirected by the light turning structure 313 and travels vertically up the optical connector slot 305. Connector 307 includes a main body 319 that provides the mechanical support for the light alignment structure 313 (e.g., mirror), the coarse alignment structures 302, and the precision alignment structures 304A-B. The core alignment features 304A-B are imaged in the core layer 106 of the waveguides 100A-G, such as imaged in core alignment structures 202A-202B including corresponding core alignment channels 204A-B as shown in FIGs. 2A-2B,

Coarse alignment structures 302 (e.g., pins) can be used for the alignment of the optical connector 307 to the waveguides 100A-G in the X-Y plane before precision alignment. The coarse alignment structures or pins 302 can be glued in place after seating the precision alignment features 204A-B.

In some variations, the optical receiving or transmitting device comprises an optical connector configured to connect to the planar waveguide.

In some variations, the top surface of the core layer is used as a reference for alignment.

In some variations, the precision alignment feature of the optical connector may be a guiding insert or a guiding rail.

In some variations, the core alignment feature in the core layer may be a guiding slot having a shape configured to match the shape of the guiding insert or the guiding rail of the optical connector.

In some variations, each of the lower cladding layer and upper cladding layer is optically transparent.

In some variations, each of the lower cladding layer and upper cladding layer has a first refractive index and a second refractive index lower than a third refractive index of the core layer such that light can transmit within the plurality of cores of the waveguide.

In some variations, the core alignment feature in the core layer is configured to align the optical receiving or transmitting device with the planar waveguide within +/- 2.0 µm. In some variations, the core alignment feature in the core layer is configured to align the optical receiving or transmitting device with the planar waveguide within +/- 1.5 µm. In some variations, the core alignment feature in the core layer is configured to align the optical receiving or transmitting device with the planar waveguide within +/- 1.0 µm. In some variations, the core alignment feature in the core layer is configured to align the optical receiving or transmitting device with the planar waveguide within +/- 0.5 µm. In some variations, the core alignment feature in the core layer is configured to align the optical receiving or transmitting device with the planar waveguide within +/- 0.4 µm. In some variations, the core alignment feature in the core layer is configured to align the optical receiving or transmitting device with the planar waveguide within +/- 0.3 µm. In some variations, the core alignment feature in the core layer is configured to align the optical receiving or transmitting device with the planar waveguide within +/- 0.2 µm. In some variations, the core alignment feature in the core layer is configured to align the optical receiving or transmitting device with the planar waveguide within +/- 0.1 µm.

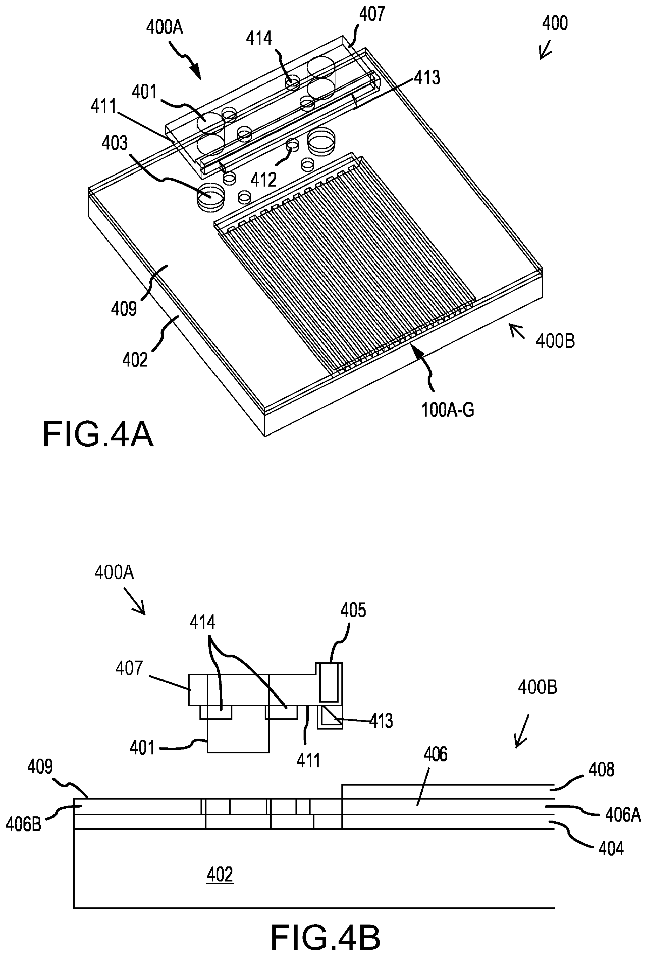

FIG. 4A is a perspective view of a PCB including waveguides and alignment features and a PCB side connector with corresponding alignment pins according to an embodiment of the disclosure. As shown in FIG. 4A, a system with passive alignment features 400 includes a top portion 400A and a bottom portion 400B. The top portion 400A is a 90-degree PCB side connector 407 including coarse alignment pins 401, either active or passive optical transmitting or receiving device. The top portion 400A also includes precision alignment pins 414 attached to the bottom surface 411 of connector 407. The precision alignment pins 414 are positioned to be outside the region of the waveguides 100A-G when connector 407 connects to the waveguides 100A-G. For example, four small precision alignment pins 414 are positioned between two large coarse pins 401. Four core alignment guiding holes 412 are positioned over a second portion of the PCB between two large guiding holes 403 on the PCB. The large guiding holes 403 are configured to receive the large coarse pins 401. The four-core alignment guiding holes 412 are configured to receive four small precision guiding pins 414. As illustrated in FIG. 4A, a light turning structure 413 (e.g., 90-degree mirror) may be attached to the bottom surface 411 of connector 407. It will be appreciated by those skilled in the art that the number and sizes of guiding holes 412 and 403 may vary.

FIG. 4B is a side view of the PCB including waveguides and alignment features and the PCB side connector and corresponding alignment pins of FIG. 4A according to an embodiment of the disclosure. As illustrated in FIG. 4B, the top portion 400A includes an optical connector slot 405 facing upward and configured to connect to another optical transmitting or receiving device. The top portion 400A may also include the light turning structure (e.g., 90-degree mirror) 413 at the bottom surface 411 of the connector 407. The bottom portion 400B includes a substrate 402 at a bottom of the stack and a lower clad layer 404 disposed over the substrate 402. The bottom portion 400B also includes a core layer 406 and an upper cladding layer 408 disposed over the core layer 406. The upper cladding layer 408 only covers the core layer 406 on the right portion 406A where the waveguides 100A-G locate. Under the connector portion 400A, the left portion 406B of the core layer 406 is not covered by the upper cladding layer. The bottom surface 411 of connector 407 will contact the top surface 409 of the left portion 406B when connector 407 is aligned with the waveguides 100A-G vertically.

### Alignment System Including Alignment Features for Optical Fibers

In some variations, the optical transmitting or receiving device may be an optical fiber, which is aligned with an optical waveguide on a PCB.

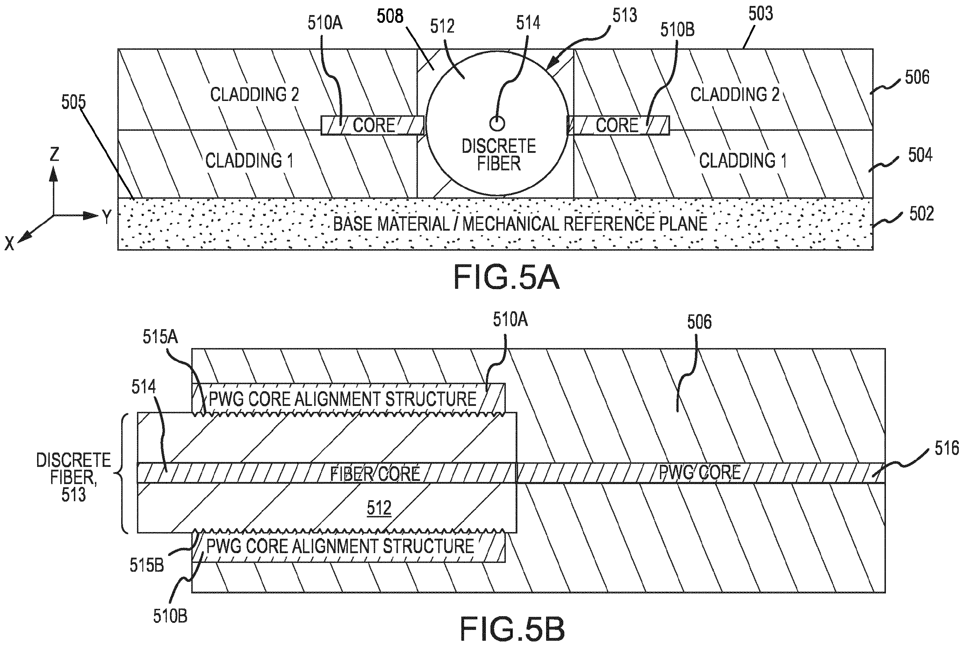

FIG. 5A is a side sectional view of an optical fiber in a fiber alignment channel formed with a waveguide on a base substrate according to an embodiment of the disclosure. A passive alignment system 500 is used for the passive alignment of optical fibers with the waveguide on a base substrate, such as a PCB. As illustrated, a passive alignment system 500 includes a base substrate 502, a lower cladding layer 504 disposed over the base substrate 502, an upper cladding layer 506 disposed over the lower cladding layer 504, and core alignment structures or features 510 in a core layer of waveguide. The passive alignment system 500 also includes fiber alignment channel 508, which is configured to receive an optical fiber 513, which is a cylindrical dielectric waveguide that transmits light along its longitudinal axis through internal reflection. The optical fiber 513 includes a fiber core 514 surrounded by a cladding layer 512. Both the fiber core 514 and the cladding layer 512 are made of dielectric materials.

As illustrated in FIG. 5A, the fiber alignment channel 508 extends from a top surface 503 downward through the upper cladding layer 506 and the lower cladding layer 504 to a top surface 505 of the base substrate or printed circuit board 502 in a Z axis perpendicular to the X-Y plane. The first alignment feature 510A and the second alignment feature 510B are embedded between the upper cladding layer 506 and the lower cladding layer 502. Also, the first alignment feature 510A is positioned to the first side of the optical fiber 513 and contacts the most-left surface portion of optical fiber 513. A second alignment feature 510B is positioned to a second side of the optical fiber 513 opposite to the first side and also contacts the most-right surface portion of the optical fiber 513. The fiber core 514 is in the same layer as the first core alignment features 510A and the second core alignment feature 510B, which are also in the same core layer 516 of the planar waveguide (as shown in FIG. 5B). Assuming that the fiber core 514 extends along an X-axis, the fiber alignment is along a Y-axis perpendicular to the X-axis in the X-Y plane. FIG. 5B is a top sectional view of the optical fiber in the fiber alignment channel formed with a waveguide on the base substrate of FIG. 5A according to an embodiment of the disclosure. As illustrated in FIG. 5B, the fiber alignment channel 508 extends along the X-axis in the X-Y plane to be substantially parallel to the core 516 of the planar waveguide. Also, the first alignment feature 510A has a first saw tooth pattern 515A and is positioned to the first side of the optical fiber 513. A second alignment feature 510B has a second saw tooth pattern 515B and is positioned to the second side of the optical fiber 513 opposite to the first side. The first saw pattern 515A and the second saw pattern 515B can push against the optical fiber 513 to reduce alignment tolerance when the optical fiber 513 is pressed into the fiber alignment channel 508. The core alignment features 510A and 510B align the core 514 of the optical fiber 513 in the alignment channel 508 with the core 516 of the waveguide or planar waveguide (PWG) core 516.

The fiber alignment channel 508 with the alignment features 510A and 510B can be formed or imaged at the same time as the waveguide. When optical fibers are placed into the fiber alignment channels, the core 514 of the optical fibers 513 can be passively aligned with the core 516 of the waveguide using the alignment features 510A-510B. As such, the tolerance control on the channel width can be within +/- 2.0 µm. In some variations, the tolerance control on the channel width can be within +/- 1.5 µm. In some variations, the tolerance control on the channel width can be within +/- 1.0 µm. In some variations, the tolerance control on the channel width can be within +/- 0.5 µm.

The saw tooth pattern 515A or 515B may include triangles or semi-circles, among others, and can allow the alignment tolerance to approach nearly zero as the optical fiber 513 is placed or pressed into the fiber alignment channel 508. In some variations, the alignment tolerance for the fiber with the waveguide is within +/- 0.1 µm.

### Fabrication of Passive Alignment Features

The core alignment features are fabricated with a single waveguide or multiple waveguides on a base substrate, such as a printed circuit board.

The corresponding alignment features are fabricated with optical transmitting or receiving devices, such as optical connectors. The corresponding alignment features are designed to match the core alignment features. If the optical connectors are from a supplier different from the supplier for the waveguide, specifications for the precision alignment features can be defined by communicating with the supplier for the waveguides.

In some variations, the core alignment feature in the core layer is configured to align the optical receiving or transmitting device with the one or more planar waveguides within +/- 1 µm.

### Methods for Passive Alignment

A passive alignment system includes a base substrate, a lower cladding layer disposed over the base substrate, a core layer disposed over the lower cladding layer, and an upper cladding layer disposed over the core layer. The passive alignment system also includes one or more planar waveguides comprising one or more cores formed in a first portion of the core layer disposed over a first portion of the lower cladding layer, the one or more cores extending from a transmitting end to a receiving end in an X-Y plane. The passive alignment system further includes at least one alignment feature formed in a second portion of the core layer disposed over a second portion of the lower cladding layer and configured to align with an optical receiving or transmitting device, wherein the at least one alignment feature aligns the optical receiving or transmitting device with the one or more planar waveguides.

### Optical Connectors

In one embodiment, the optical receiving or transmitting device includes an optical connector configured to connect to the one or more planar waveguides. The optical connector includes at least one corresponding alignment feature configured to mate to the at least one alignment feature in the core layer.

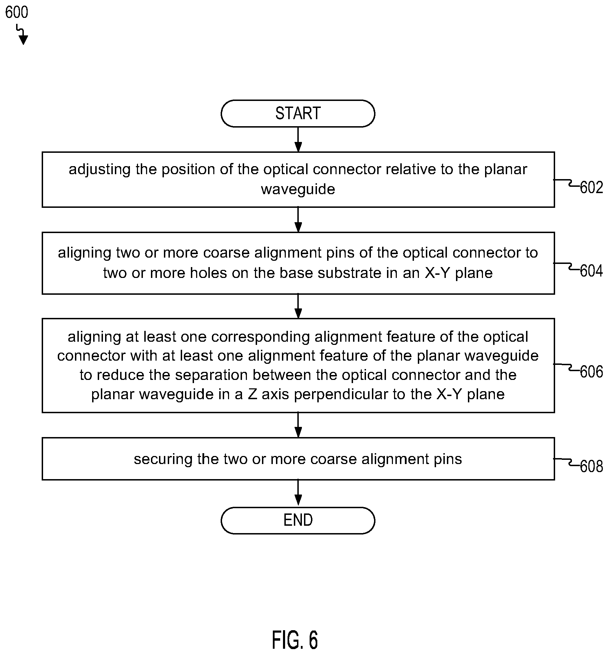

FIG. 6 is a flow chart illustrating the steps for passive alignment of optical receiving or transmitting devices with planar waveguides according to an embodiment of the disclosure. Method 600 is used for the passive alignment of the optical connector to the planar waveguide.

Method 600 may include adjusting the position of the optical connector relative to one of the one or more planar waveguides at operation 602.

Method 600 may also include aligning two or more coarse alignment structures of the optical connector with two or more holes on the base substrate near the one or more planar waveguides in a X-Y plane prior to aligning the at least one corresponding alignment feature; at operation 604.

Method 600 may also include aligning the at least one corresponding alignment feature of the optical connector with the at least one alignment feature of the one or more planar waveguides to reduce separation between the optical connector and the one or more planar waveguides in a Z axis perpendicular to the X-Y plane at operation 606.

In some variations, the at least one alignment feature of the core layer comprises one of a guiding slot or a guiding hole.

In some variations, the at least one corresponding alignment feature of the optical connector may include a guiding insert, a guiding rail, or a guiding pin having a shape configured to match the shape of the guiding slot or guiding hole.

In some variations, the at least one corresponding alignment feature of the optical connector is configured to align with the at least one alignment feature of the planar waveguide within +/- 1 µm.

Method 600 may further include securing the two or more coarse alignment pins at operation 608.

### Optical Fibers

In another embodiment, the optical receiving or transmitting device includes one or more optical fibers and at least one fiber alignment channel configured to receive the one or more optical fibers. The at least one alignment feature aligns the one or more optical fibers with the one or more planar waveguides to connect one or more cores of the one or more optical fibers with one or more cores of the one or more planar waveguides.

In some variations, the at least one fiber alignment channel extends from a top surface of the upper cladding layer through the upper cladding layer and the lower cladding layer to a top surface of the base substrate along a Z-axis perpendicular to the X-Y plane, and extends in the X-Y plane to be parallel to the one or more cores.

In some variations, the at least one alignment feature includes a first alignment feature positioned to a first side of the at least one fiber alignment channel and a second alignment feature positioned to a second side of the at least one fiber alignment channel opposite to the first side, the first alignment feature and the second alignment feature are embedded between the upper cladding layer and the lower cladding layer. The first alignment feature includes a first saw tooth pattern, and the second alignment feature includes a second saw tooth pattern.

In some variations, the base substrate includes a printed circuit board.

In some variations, the transmitting end is coupled to one or more transmitters, while the receiving end is coupled to one or more receivers.

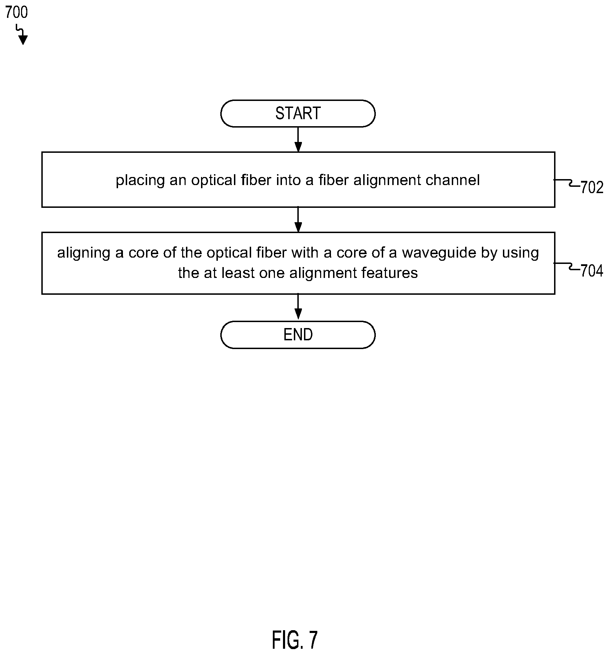

FIG. 7 is a flow chart illustrating the steps for the passive alignment of optical fibers with planar waveguides according to an embodiment of the disclosure. Method 700 is provided for the passive alignment of the optical fiber to the planar waveguide.

Method 700 may include placing the one or more optical fibers into the at least one fiber alignment channel at operation 702.

In some variations, the at least one alignment feature may include a first alignment feature having a first saw tooth pattern positioned to a first side of the at least one fiber alignment channel and a second alignment feature having a second saw tooth pattern positioned to a second side of the at least one fiber alignment channel opposite to the first side. The first alignment feature and the second alignment feature are embedded between the upper cladding layer and the lower cladding layer.

Method 700 may also include aligning one or more cores of the one or more optical fibers with one or more cores of the one or more planar waveguides by using the at least one alignment feature. placing an optical fiber into a fiber alignment channel at operation 704.

In some variations, aligning one or more cores of the one or more optical fibers may further include pushing one of the one or more optical fibers against the first saw tooth pattern and the second saw tooth pattern to reduce alignment tolerance.

In some variations, the alignment tolerance for the optical fiber to the core of the waveguide is within +/- 0.1 µm. In some variations, the alignment tolerance for the fiber with the waveguide is within +/- 0.05 µm. In some variations, the alignment tolerance for the fiber with the waveguide is within +/- 0.01 µm. In some variations, the alignment tolerance for the fiber with the waveguide is within +/- 0.001 µm.

### Example Cross-Sections

The following examples are for illustration purposes only. It will be apparent to those skilled in the art that many modifications, both to materials and methods, may be practiced without departing from the scope of the disclosure.

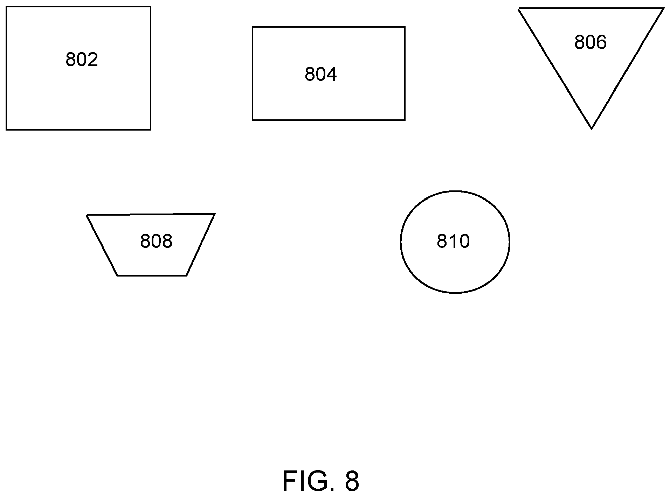

FIG. 8 illustrates example cross-sections of the core alignment slots formed in the core layer according to embodiments of the disclosure. As illustrated, the core alignment features 204, such as guiding slot or guiding hole, may have a cross-section having one of the square 802, rectangle 804, triangle 806, trapezoid 808, or circular 810.

It will be appreciated by those skilled in the art that the shape of the cross-section of the core alignment feature may vary as long as the precision alignment features of the optical receiving or transmitting device can mate to the core alignment feature.

Any ranges cited herein are inclusive. The terms "substantially" and "about" used throughout this Specification are used to describe and account for small fluctuations. For example, they can refer to less than or equal to ± 5%, such as less than or equal to ± 2%, such as less than or equal to ± 1 %, such as less than or equal to ± 0.5%, such as less than or equal to ± 0.2%, such as less than or equal to ± 0.1 %, such as less than or equal to ± 0.05%.

Clause 1. A passive alignment system comprises: a base substrate; a lower cladding layer disposed over the base substrate; a core layer disposed over the lower cladding layer; an upper cladding layer disposed over the core layer; one or more planar waveguides comprising one or more cores formed in a first portion of the core layer disposed over a first portion of the lower cladding layer, the one or more cores extending from a transmitting end to a receiving end in an X-Y plane; at least one alignment feature formed in a second portion of the core layer disposed over a second portion of the lower cladding layer and configured to align with an optical receiving or transmitting device, wherein the at least one alignment feature aligns the optical receiving or transmitting device with the one or more planar waveguides.

Clause 2. The passive alignment system of clause 1, wherein the optical receiving or transmitting device comprises an optical connector configured to connect to the one or more planar waveguides, wherein the optical connector comprises at least one corresponding alignment feature configured to mate to the at least one alignment feature in the core layer.

Clause 3. The passive alignment system of any one of preceding clauses, wherein the at least one corresponding alignment feature extends along a Z axis perpendicular to the X-Y plane such that a bottom surface of the optical connector contacts a top surface of the core layer.

Clause 4. The passive alignment system of any one of preceding clauses, wherein a top surface of the core layer is used as a reference along a Z-axis for alignment of the optical connector to the one or more planar waveguides, the Z-axis being perpendicular to the X-Y plane.

Clause 5. The passive alignment system of any one of preceding clauses, wherein the at least one alignment feature of the core layer comprises one of a guiding slot, or a guiding hole, wherein the at least one corresponding alignment feature of the optical connector comprises a guiding insert, a guiding rail, or a guiding pin having a shape configured to match to the shape of the guiding slot or guiding hole, wherein the guiding slot or the guiding hole has a cross-section comprising one of a square, a rectangle, a triangle, a trapezoid, or a circle.

Clause 6. The passive alignment system of any one of preceding clauses, wherein a first portion of the upper cladding layer is disposed over the one or more planar waveguides and a second portion of the upper cladding layer is disposed over the at least one alignment feature and the lower cladding layer.

Clause 7. The passive alignment system of any one of clauses 1 and 6, wherein the optical receiving or transmitting device comprises one or more optical fibers and at least one fiber alignment channel configured to receive the one or more optical fibers, the at least one alignment feature aligning the one or more optical fibers with the one or more planar waveguides to connect one or more cores of the one or more optical fibers with one or more cores of the one or more planar waveguides.

Clause 8. The passive alignment system of any one of clauses 1 and 6-7, wherein the at least one fiber alignment channel extends from a top surface of the upper cladding layer through the upper cladding layer and the lower cladding layer to a top surface of the base substrate along a Z-axis perpendicular to the X-Y plane, and extends in the X-Y plane to be parallel to the one or more cores.

Clause 9. The passive alignment system of any one of clauses 1 and 6-8, wherein the at least one alignment feature comprises a first alignment feature positioned to a first side of the at least one fiber alignment channel and a second alignment feature positioned to a second side of the at least one fiber alignment channel opposite to the first side, the first alignment feature and the second alignment feature are embedded between the upper cladding layer and the lower cladding layer.

Clause 10. The passive alignment system of any one of clauses 1 and 6-9, wherein the first alignment feature comprises a first saw tooth pattern, wherein the second alignment feature comprises a second saw tooth pattern.

Clause 11. The passive alignment system of any one of preceding clauses, wherein the base substrate comprises a printed circuit board.

Clause 12. The passive alignment system of any one of preceding clauses, wherein the transmitting end is coupled to one or more transmitters, wherein the receiving end is coupled to one or more receivers.

Clause 13. A method for passive alignment of the optical connector to one of the one or more planar waveguides of any one of preceding clauses 1-6 and 11-12, the method comprising: adjusting position of the optical connector relative to one of the one or more planar waveguides; and aligning the at least one corresponding alignment feature of the optical connector with the at least one alignment feature of the one or more planar waveguides to reduce separation between the optical connector and the one or more planar waveguides in a Z axis perpendicular to the X-Y plane.

Clause 14. The method of clause 13, wherein the at least one corresponding alignment feature of the optical connector is configured to align with the at least one alignment feature of the one or more planar waveguides within +/-1 µm.

Clause 15. The method of any one of clauses 13-14, wherein the at least one alignment feature in the core layer comprises one of a guiding slot or a guiding hole, wherein the at least one corresponding alignment feature of the optical connector comprises a guiding insert, a guiding rail, or a guiding pin having a shape configured to match to the shape of the guiding slot or guiding hole.

Clause 16. The method of any one of clauses 13-15, further comprising: aligning two or more coarse alignment structures of the optical connector with two or more holes on the base substrate near the one or more planar waveguides in a X-Y plane prior to aligning the at least one corresponding alignment feature; and securing the two or more coarse alignment structures.

Clause 17. A method for passive alignments of the one or more optical fibers to the one or more planar waveguides of any one of clauses 1 and 6-12, the method comprising: placing the one or more optical fibers into the at least one fiber alignment channel; and aligning one or more cores of the one or more optical fibers with one or more cores of the one or more planar waveguides by using the at least one alignment feature.

Clause 18. The method of clause 17, wherein the at least one alignment feature comprises a first alignment feature having a first saw tooth pattern positioned to a first side of the at least one fiber alignment channel and a second alignment feature having a second saw tooth pattern positioned to a second side of the at least one fiber alignment channel opposite to the first side, the first alignment feature and the second alignment feature are embedded between the upper cladding layer and the lower cladding layer.

Clause 19. The method of any one of clauses 17-18, wherein aligning one or more cores of the one or more optical fibers further comprises pushing one of the one or more optical fibers against the first saw tooth pattern and the second saw tooth pattern to reduce alignment tolerance.

Clause 20. The method of any one of clauses 17-19, wherein the alignment tolerance for the one or more optical fibers to one or more cores of the one or more planar waveguides is within +/- 0.1 µm.

Clause 21. A passive alignment system comprises: a base substrate; a lower cladding layer disposed over the base substrate; one or more planar waveguides comprising a plurality of cores formed in a core layer between a first portion of the lower cladding layer and a first portion of an upper cladding layer disposed over the core layer, the plurality of cores extending from a transmitting end to a receiving end in an X-Y plane; and at least one alignment feature formed in the core layer disposed over a second portion of the lower cladding layer and configured to align with an optical receiving or transmitting device configured to connect to the planar waveguide, wherein the at least one alignment feature aligns the optical receiving or transmitting device with the one or more planar waveguides.

Clause 22. The system of clause 21, wherein the optical receiving or transmitting device comprises an optical connector configured to connect to the one or more planar waveguides.

Clause 23. The system of clause 22, wherein a top surface of the core layer is used as a Z-axis reference for alignment of the optical connector to the one or more planar waveguides, the Z-axis being perpendicular to the X-Y plane.

Clause 24. The system of clause 23, wherein the optical connector comprises at least one corresponding alignment feature extending along a Z axis perpendicular to the X-Y plane and configured to mate to the at least one alignment feature in the core layer such that a bottom surface of the optical connector contacts the top surface of the core layer.

Clause 25. The system of clause 24, wherein the at least one alignment feature of the core layer comprises one of a guiding slot, or a guiding hole, wherein the at least one corresponding alignment feature of the optical connector comprises a guiding insert, a guiding rail, or a guiding pin having a shape configured to match to the shape of the guiding slot, or the guiding hole.

Clause 26. The system of clause 25, wherein the guiding slot or the guiding hole has a cross-section comprising one of a square, a rectangle, a triangle, a trapezoid, or a circle.

Clause 27. The system of clause 21, wherein each of the lower cladding layer and upper cladding layer is optically transparent.

Clause 28. The system of clause 21, wherein each of the lower cladding layer and upper cladding layer has a first refractive index and a second refractive index lower than a third refractive index of the core layer such that optical signals can transmit within the plurality of cores.

Clause 29. The system of clause 21, wherein the at least one alignment feature in the core layer is configured to align the optical receiving or transmitting device with the one or more planar waveguides within +/-1 µm.

Clause 30. The system of clause 21, wherein the optical receiving or transmitting device comprises one or more optical fibers configured to connect to the plurality of cores of one or more waveguides.

Clause 31. The system of clause 30, further comprising a second portion of the upper cladding layer disposed over the at least one alignment feature and the lower cladding layer.

Clause 32. The system of clause 31, further comprising at least one fiber alignment channel extending through the upper cladding layer and the lower cladding layer to the base substrate in a Z axis perpendicular to the X-Y plane and also extending in the X-Y plane to be parallel to the plurality of cores.

Clause 33. The system of clause 32, wherein the at least one alignment feature comprises a first alignment feature positioned to a first side of the at least one fiber alignment channel and a second alignment feature having a second saw tooth pattern positioned to a second side of the at least one fiber alignment channel opposite to the first side, the first alignment feature and the second alignment feature are embedded between the upper cladding layer and the lower cladding layer.

Clause 34. The system of clause 33, wherein the first alignment feature comprises a first saw tooth pattern, wherein the second alignment feature comprises a second saw tooth pattern.

Clause 35. The system of clause 31, wherein the base substrate comprises a printed circuit board.

Clause 36. The system of clause 31, wherein the transmitting end is coupled to one or more transmitters, wherein the receiving end is coupled to one or more receivers.

Clause 37. A method for passive alignment of the optical connector to the planar waveguide of any one of clauses 22-26, the method comprising: adjusting position of the optical connector relative to the planar waveguide; and aligning the at least one corresponding alignment feature of the optical connector to at least one alignment feature of the planar waveguide to reduce separation between the optical connector and the planar waveguide in a Z axis perpendicular to the X-Y plane .

Clause 38. The method of clause 37, wherein the at least one corresponding alignment feature of the optical connector is configured to align with the at least one alignment feature of the planar waveguide within +/-1 µm.

Clause 39. The method of clause 37, wherein the at least one alignment feature of the core layer comprises one of a guiding slot or a guiding hole, wherein the at least one corresponding alignment feature of the optical connector comprises a guiding insert, a guiding rail, or a guiding pin having a shape configured to match to the shape of the guiding slot or guiding hole.

Clause 40. The method of clause 37, further comprising: aligning two or more coarse alignment structures of the optical connector to two or more holes of the planar waveguide in a X-Y plane prior to aligning the at least one corresponding alignment feature; and securing the two or more coarse alignment pins.

Clause 41. A method for passive alignments of the one or more optical fibers to the planar waveguide of any one of clauses 30-34, the method comprising: placing the one of one or more optical fibers into the at least one fiber alignment channel; and aligning the one of the one or more optical fibers with one of the plurality of cores by using the first and second alignment features.

Clause 42. The method of clause 41, wherein the first alignment feature comprises a first saw tooth pattern, wherein the second alignment feature comprises a second saw tooth pattern.

Clause 43. The method of clause 42, further comprising pushing one of the one or more optical fibers against the first saw pattern and the second saw pattern to reduce alignment tolerance when the one of the one or more optical fibers is pressed into the at least one fiber alignment channel.

Clause 44. The method of clause 43, wherein the alignment tolerance for the one or more fibers to the cores of the waveguides is within +/- 0.1 µm.

Having described several embodiments, it will be recognized by those skilled in the art that various modifications, alternative constructions, and equivalents may be used without departing from the spirit of the invention. Additionally, a number of well-known processes and elements have not been described in order to avoid unnecessarily obscuring the invention. Accordingly, the above description should not be taken as limiting the scope of the invention.

Those skilled in the art will appreciate that the presently disclosed embodiments teach by way of example and not by limitation. Therefore, the matter contained in the above description or shown in the accompanying drawings should be interpreted as illustrative and not in a limiting sense. The following claims are intended to cover all generic and specific features described herein, as well as all statements of the scope of the method and system, which, as a matter of language, might be said to fall therebetween.

## Claims

1. A passive alignment system comprises:
a base substrate;
a lower cladding layer disposed over the base substrate;
a core layer disposed over the lower cladding layer;
an upper cladding layer disposed over the core layer;
one or more planar waveguides comprising one or more cores formed in a first portion of the core layer disposed over a first portion of the lower cladding layer, the one or more cores extending from a transmitting end to a receiving end in an X-Y plane;
at least one alignment feature formed in a second portion of the core layer disposed over a second portion of the lower cladding layer and configured to align with an optical receiving or transmitting device, wherein the at least one alignment feature aligns the optical receiving or transmitting device with the one or more planar waveguides.

2. The passive alignment system of claim 1, wherein the optical receiving or transmitting device comprises an optical connector configured to connect to the one or more planar waveguides, wherein the optical connector comprises at least one corresponding alignment feature configured to mate to the at least one alignment feature in the core layer.

3. The passive alignment system of any one of preceding claims, wherein the at least one corresponding alignment feature extends along a Z axis perpendicular to the X-Y plane such that a bottom surface of the optical connector contacts a top surface of the core layer.

4. The passive alignment system of any one of preceding claims, wherein a top surface of the core layer is used as a reference along a Z-axis for alignment of the optical connector to the one or more planar waveguides, the Z-axis being perpendicular to the X-Y plane.

5. The passive alignment system of any one of preceding claims, wherein the at least one alignment feature of the core layer comprises one of a guiding slot, or a guiding hole, wherein the at least one corresponding alignment feature of the optical connector comprises a guiding insert, a guiding rail, or a guiding pin having a shape configured to match to the shape of the guiding slot or guiding hole, wherein the guiding slot or the guiding hole has a cross-section comprising one of a square, a rectangle, a triangle, a trapezoid, or a circle.

6. The passive alignment system of any one of preceding claims, wherein a first portion of the upper cladding layer is disposed over the one or more planar waveguides and a second portion of the upper cladding layer is disposed over the at least one alignment feature and the lower cladding layer.

7. The passive alignment system of any one of claims 1 and 6, wherein the optical receiving or transmitting device comprises one or more optical fibers and at least one fiber alignment channel configured to receive the one or more optical fibers, the at least one alignment feature aligning the one or more optical fibers with the one or more planar waveguides to connect one or more cores of the one or more optical fibers with one or more cores of the one or more planar waveguides.

8. The passive alignment system of any one of claims 1 and 6-7, wherein the at least one fiber alignment channel extends from a top surface of the upper cladding layer through the upper cladding layer and the lower cladding layer to a top surface of the base substrate along a Z-axis perpendicular to the X-Y plane, and extends in the X-Y plane to be parallel to the one or more cores.

9. The passive alignment system of any one of claims 1 and 6-8, wherein the at least one alignment feature comprises a first alignment feature positioned to a first side of the at least one fiber alignment channel and a second alignment feature positioned to a second side of the at least one fiber alignment channel opposite to the first side, the first alignment feature and the second alignment feature are embedded between the upper cladding layer and the lower cladding layer.

10. The passive alignment system of any one of claims 1 and 6-9, wherein the first alignment feature comprises a first saw tooth pattern, wherein the second alignment feature comprises a second saw tooth pattern.

11. The passive alignment system of any one of preceding claims, wherein the base substrate comprises a printed circuit board.

12. The passive alignment system of any one of preceding claims, wherein the transmitting end is coupled to one or more transmitters, wherein the receiving end is coupled to one or more receivers.

13. A method for passive alignment of the optical connector to one of the one or more planar waveguides of any one of preceding claims 1-6 and 11-12, the method comprising:
adjusting position of the optical connector relative to one of the one or more planar waveguides; and
aligning the at least one corresponding alignment feature of the optical connector with the at least one alignment feature of the one or more planar waveguides to reduce separation between the optical connector and the one or more planar waveguides in a Z axis perpendicular to the X-Y plane.

14. The method of claim 13, wherein the at least one corresponding alignment feature of the optical connector is configured to align with the at least one alignment feature of the one or more planar waveguides within +/-1 µm.

15. The method of any one of claims 13-14, wherein the at least one alignment feature in the core layer comprises one of a guiding slot or a guiding hole, wherein the at least one corresponding alignment feature of the optical connector comprises a guiding insert, a guiding rail, or a guiding pin having a shape configured to match to the shape of the guiding slot or guiding hole.

16. The method of any one of claims 13-15, further comprising:
aligning two or more coarse alignment structures of the optical connector with two or more holes on the base substrate near the one or more planar waveguides in a X-Y plane prior to aligning the at least one corresponding alignment feature; and
securing the two or more coarse alignment structures.

17. A method for passive alignments of the one or more optical fibers to the one or more planar waveguides of any one of claims 1 and 6-12, the method comprising:
placing the one or more optical fibers into the at least one fiber alignment channel; and
aligning one or more cores of the one or more optical fibers with one or more cores of the one or more planar waveguides by using the at least one alignment feature.

18. The method of claim 17, wherein the at least one alignment feature comprises a first alignment feature having a first saw tooth pattern positioned to a first side of the at least one fiber alignment channel and a second alignment feature having a second saw tooth pattern positioned to a second side of the at least one fiber alignment channel opposite to the first side, the first alignment feature and the second alignment feature are embedded between the upper cladding layer and the lower cladding layer.

19. The method of any one of claims 17-18, wherein aligning one or more cores of the one or more optical fibers further comprises pushing one of the one or more optical fibers against the first saw tooth pattern and the second saw tooth pattern to reduce alignment tolerance.

20. The method of any one of claims 17-19, wherein the alignment tolerance for the one or more optical fibers to one or more cores of the one or more planar waveguides is within +/- 0.1 µm.
